# EUROPEAN PATENT SPECIFICATION

(11) **EP 3 778 273 B1**
(45) Date of publication and mention of the grant of the patent: **21.06.2023**
(21) Application number: 19775583.8
(22) Date of filing: 27.03.2019
(51) Int. Cl.: B60H 1/22, B60N 2/56, B60R 7/04, B60R 13/02, B60H 1/00

(54) **VEHICLE HEATING DEVICE AND VEHICLE PROVIDED WITH VEHICLE HEATING DEVICE**
FAHRZEUGHEIZVORRICHTUNG UND FAHRZEUG MIT DER FAHRZEUGHEIZVORRICHTUNG
DISPOSITIF DE CHAUFFAGE DE VÉHICULE ET VÉHICULE DOTÉ DU DISPOSITIF DE CHAUFFAGE DE VÉHICULE

(30) Priority: 30.03.2018 JP 2018068763; 06.03.2019 JP 2019040715
(43) Date of publication of application: 17.02.2021
(73) Proprietor: Panasonic Intellectual Property Management Co., Ltd., Osaka-shi, Osaka 540-6207 (JP); Japan Climate Systems Corporation, Higashihiroshima-shi, Hiroshima 739-0153 (JP)
(72) Inventor: KOMORI, Kou, Osaka-shi, Osaka 540-6207 (JP); FURUI, Mio, Osaka-shi, Osaka 540-6207 (JP); SAITOU, Kensaku, Osaka-shi, Osaka 540-6207 (JP); NAKASHIMA, Yu, Osaka-shi, Osaka 540-6207 (JP); HAMAMOTO, Hiroshi, Higashihiroshima-shi, Hiroshima 739-0153 (JP); MIYAZAKI, Yoichi, Higashihiroshima-shi, Hiroshima 739-0153 (JP); NISHII, Hideaki, Higashihiroshima-shi, Hiroshima 739-0153 (JP); SHIGENAKA, Hiroaki, Higashihiroshima-shi, Hiroshima 739-0153 (JP)
(74) Representative: Eisenführ Speiser
(86) International application number: PCT/JP2019/013420
(87) International publication number: WO 2019/189499

(56) References cited:
- WO-A1-2008/155893
- DE-A1-102015 011 047
- DE-B3-102004 042 440
- FR-A1- 3 040 658
- JP-A- H0 471 182
- JP-A- 2003 231 411
- JP-A- 2005 212 556
- JP-A- 2006 076 503
- JP-A- 2010 111 250
- JP-A- 2012 192 827
- US-A1- 2012 234 932

## Description

### TECHNICAL FIELD

The present invention relates to, for example, a vehicle heater provided for an automobile or any other vehicle and a vehicle including the vehicle heater, and more particularly belongs to the technical field of radiant heating.

### BACKGROUND ART

An automobile has been equipped with a cabin air-conditioning unit configured to condition air in the cabin using air-conditioned wind blowing out of outlets in the cabin. The cabin air-conditioning unit includes a refrigeration-cycle system, a heater core through which a coolant for an engine circulates, and a blower, and is configured to exchange heat between air-conditioning air delivered by the blower and a refrigerant circulating through the refrigeration-cycle system or the engine coolant circulating through the heater core to provide air-conditioned wind having a desired temperature. In addition, a heat pump system of an electric vehicle or any other vehicle that does not include the heater core conditions air in the cabin.

In some cases, an automobile is equipped with a direct warmer directly warming an occupant, a radiant warmer warming the occupant by radiant heat, and any other similar system, in addition to the cabin air-conditioning unit (see, for example, JP 2015-223917 and JP 2011-246091). JP 2015-223917 shows a direct warmer including a steering heater, a seat heater, and an armrest heater, and a radiant warmer including a radiant heater spaced apart upward from the shins of an occupant. In JP 2011-246091, a radiant heater that radiates heat toward a rear seat occupant is provided on the back surface of a front seat.

In DE 10 2004 042440 B3, the vehicle comprises multiple electrical heating elements disposed in the interior which allow to warm the occupant.

### SUMMARY OF THE INVENTION

### TECHNICAL PROBLEM

In a cold environment, the calves or the lateral and medial aspects of the shins may experience an intense cold sensation, which may cause the entire body to experience a cold sensation. In particular, in a vehicle, cold tends to be radiated from interior materials to the calves or the lateral and medial aspects of the shins, and thus the cold sensation tends to be intensified. Thus, if efficient heating is to be achieved, what is important is to eliminate the cold sensation experienced by the calves or the lateral and medial aspects of the shins as early as possible to allow the calves or the lateral and medial aspects of the shins to experience a warm sensation.

However, the radiant heater of JP 2015-223917 is positioned to radiate heat from above toward the shins of the occupant. The distance between the radiant heater and the legs is long. Thus, the view factor for this radiation is small, and heat input into the calves of the occupant or lateral and medial aspects of his/her shins can hardly be expected.

In JP 2011-246091, the radiant heater is provided on the back surface of the front seat. This prevents radiant heating in consideration of an occupant on the front seat, on which an occupant is most highly likely to be seated, and causes heat radiated from the radiant heater toward a rear seat occupant to enter his/her shins from the front of his/her shins. Thus, heat input into the calves of the occupant or lateral and medial aspects of his/her shins can hardly be expected.

An occupant is not always in the same position, and may move his/her legs. Thus, it is not easy to input heat into the calves of the occupant or the lateral and medial aspects of the shins. Heating using air-conditioned wind supplied from the cabin air-conditioning unit must have been relied on. Since the air-conditioned wind flows throughout the cabin, the calves or the lateral and medial aspects of the shins cannot be intensively warmed. This results in poor efficiency. As a result, energy consumed by heating increases.

In view of the foregoing background, it is therefore an object of the present invention to allow the calves of an occupant to be warmed from both sides of these calves by radiant heat to reduce energy consumed by heating while providing a satisfactory thermal sensation.

### SOLUTION TO THE PROBLEMS

In order to achieve the foregoing object, a vehicle heater according to a first aspect of the invention is provided as defined in claim 1.

With this configuration, air-conditioned wind produced by the cabin air-conditioning unit blows out of the outlet in the cabin. Thus, the air-conditioned wind allows air in the cabin to be conditioned. The direct warmer directly warms a part of the occupant in contact therewith. Moreover, the radiant warmer allows the calves of the occupant to be warmed from their right and left sides by radiant heat. Thus, cold heat of the interior materials is less likely to reach the calves and lateral and medial aspects of the shins. Thus, even if the temperature in the cabin is low, the calves and lateral and medial aspects of the shins can be prevented from experiencing a cold sensation. This provides a satisfactory thermal sensation. As a result, energy consumed by heating of the cabin air-conditioning unit can be reduced.

The interior materials include a door trim disposed on a side of a vehicle door facing the cabin, and a console lateral to a seat, and the radiant warmer includes a door trim radiant heater provided in a lower portion of the door trim, and a console radiant heater provided in a side wall portion of the console.

With this configuration, the door trim and the side wall portion of the console are located near right and left lateral aspects of the calves of the occupant. The door trim and the side wall portion of the console each including the radiant heater allow radiant heat to reliably enter the calves and the lateral and medial aspects of the shins.

In a vehicle heater according to a second aspect of the invention, the door trim radiant heater is positioned at a portion of the door trim below an armrest portion of the door trim.

With this configuration, positioning the door trim radiant heater below the armrest portion can reduce radiant heat entering the upper body.

In a vehicle heater according to a third aspect of the invention, the door trim radiant heater is positioned at a portion of the door trim forward of a front end of the seat, and the console radiant heater is positioned at a portion of the side wall portion of the console forward of the front end of a cushion seating face of a seat.

With this configuration, positioning the door trim radiant heater and the console radiant heater forward of the front end of a cushion seating face of the seat can prevent radiant heat from entering the seat.

In a vehicle heater according to a fourth aspect of the invention, the direct warmer is positioned to warm portions of the occupant above his/her knees.

With this configuration, the back of the thighs, the buttocks, the waist, and the back of the occupant can be warmed using the direct warmer and air-conditioned wind of the cabin air-conditioning unit. Meanwhile, portions of the occupant below his/her knees can be warmed using the radiant warmer and air-conditioned wind of the cabin air-conditioning unit. Thus, portions of the occupant above his/her knees and portions thereof below his/her knees can be individually heated at respective suitable temperatures. Thus, a large portion of the body of the occupant can be less unevenly warmed, and a comfortable thermal sensation can be provided.

In a vehicle heater according to a fifth aspect of the invention, the controller includes an upper-body thermal sensation estimator configured to estimate a thermal sensation experienced by front and back sides of an upper body of the occupant. The controller sets an output of the seat heater system and a temperature of air blowing out of the cabin air-conditioning unit such that the seat heater system and warm air provided by the cabin air-conditioning unit allow the front and back sides of the upper body of the occupant to experience a uniform thermal sensation.

With this configuration, heating with the seat heater system and radiant heat allows the front side (e.g., chest and belly) and back side of the occupant to experience a uniform thermal sensation. This can further improve the comfort.

The door trim radiant heater of a vehicle heater according to a sixth aspect of the invention has a higher rated output than the console radiant heater does.

Specifically, since the door trim is closer to the outside of the cabin than the console is, the door trim tends to be affected by cold air outside the cabin, and tends to release heat to the outside of the cabin. If the output of the door trim radiant heater of the door trim is higher than that of the console radiant heater, or if a higher volume of warm air blowing out of the cabin air-conditioning unit from near the feet is distributed toward an area near the door trim, heating can function more quickly while the balance between heat from the right heater and heat from the left heater is substantially prevented from being lost.

In a vehicle heater according to an seventh aspect of the invention, the door trim radiant heater includes a heater wire configured to generate heat by energization, a cover member configured to cover a side of the heater wire near inside of the cabin, and a heat insulator disposed on a side of the heater wire near outside of the cabin.

With this configuration, a side of the heater wire near the inside of the cabin is covered with the cover member. This can prevent the occupant from touching the heater wire, and can improve the safety. Further, the heat insulator interposed between the heater wire and the door trim makes it difficult for heat generated by the heater wire to escape toward the outside of the cabin, and can enhance the heating efficiency.

A vehicle including the vehicle heater according to any one of the first to seventh aspects may be configured.

### ADVANTAGES OF THE INVENTION

According to the present invention, in addition to a cabin air-conditioning unit configured to condition air in the cabin using air-conditioned wind, radiant heat can warm the calves of an occupant from both sides of the calves. This can reduce energy consumed by heating while providing a satisfactory thermal sensation.

### BRIEF DESCRIPTION OF THE DRAWINGS

FIG. 1 is a side view of a portion of the inside of the cabin of an automobile according to an embodiment of the present invention.
FIG. 2 is a perspective view illustrating a portion of the cabin near the driver's seat.
FIG. 3 is a side view of a left door as viewed from the inside of the cabin.
FIG. 4 is a left side view of a console.
FIG. 5 is a schematic diagram of a configuration of a cabin air-conditioning unit.
FIG. 6 illustrates a state in which a vehicle seat including a seat heater is divided into a seat cushion part and a seat back part.
FIG. 7 is a cross-sectional view of a door trim radiant heater.
FIG. 8 is a block diagram of a vehicle heater.

### DESCRIPTION OF EMBODIMENT

Embodiment of the present invention will now be described in detail with reference to the drawings. The following description of preferred embodiment is a mere example in nature.

### (Configuration of Automobile 1)

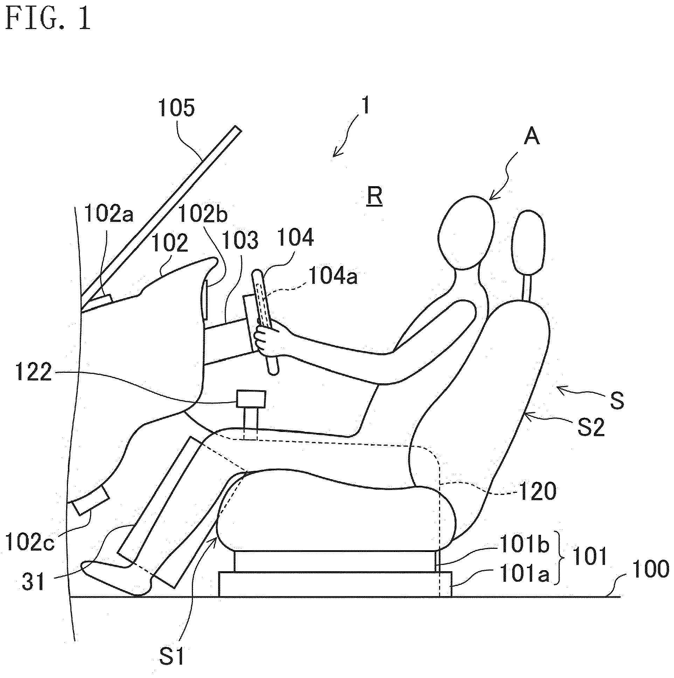

FIG. 1 is a side view of a portion of the inside of the cabin R of an automobile 1 according to an embodiment of the present invention. In the following description, the terms "front," "forward," and derivatives thereof refer to the front side of a vehicle in the longitudinal direction of the vehicle, the terms "rear," "rearward," and derivatives thereof refer to the rear side of the vehicle in the longitudinal direction of the vehicle, the terms "left," "leftward," and derivatives thereof refer to the left side of the vehicle in the lateral direction of the vehicle, and the terms "right," "rightward," and derivatives thereof refer to the right side of the vehicle in the lateral direction of the vehicle.

A vehicle seat S is attached to a floor panel 100 inside the cabin R with a sliding device 101 interposed therebetween. A front end portion of the cabin R includes an instrument panel 102 including instruments (not shown). A steering column 103 is provided on a portion of the instrument panel 102 near the driver's seat to protrude rearward. A rear end portion of the steering column 103 is provided with a steering wheel 104 facing an occupant A.

The sliding device 101 includes a rail member 101a fixed to the floor panel 100 and extending in the longitudinal direction, a guided member 101b fixed to a lower portion of the vehicle seat S and guided in the longitudinal direction by the rail member 101a, and a lock member (not shown) fixing the guided member 101b to the rail member 101a at a desired position.

The front end portion of the cabin R is provided with a windshield glass 105. A lower end portion of the windshield glass 105 is located near the front end of the instrument panel 102.

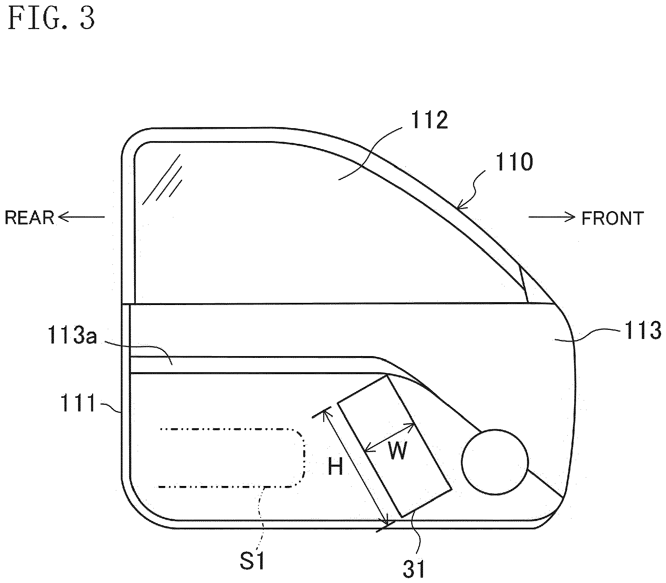

A door 110 as shown in FIG. 3 is provided on both right and left sides of the automobile 1. The door 110 shown in FIG. 3 is a left door disposed on the left side of the automobile 1. Although not shown, a right door that is symmetrical to this left door is disposed on the right side of the automobile 1. In this embodiment, a situation where the occupant A is seated on the vehicle seat S provided on the left side of the automobile 1 will be described. However, this is merely an example of the present invention. The present invention is applicable to a situation where the occupant A is seated on a vehicle seat (not shown) provided on the right side of the automobile 1.

In the following description, assumptions are made that the occupant A is an adult (male or female) having an average height and an average weight, and that the occupant A is in a normal occupant posture (e.g., the posture shown in FIG. 1), i.e., if the occupant A is a driver, he/she is in an occupant posture that does not hinder safety, whereas if the occupant A is seated next to the driver, or on a rear seat, he/she is in a typical occupant posture. No assumption is made that, for example, the occupant A is in a posture where his/her waist is shifted forward, such as a posture where he/she stretches himself/herself out, or in any other similar posture.

As shown in FIG. 3, the door 110 includes a door body portion 111 configured as a steel plate or any other member, a side window glass 112 disposed on the upper side of the door body portion 111, and a door trim (interior material) 113 disposed on a surface of the door body portion 111 near the inside of the cabin. The door trim 113 is a resin member covering the door body portion 111 from the inside of the cabin. The door trim 113 includes an armrest portion 113a which is provided below the beltline and on which an arm of the occupant A can be rested.

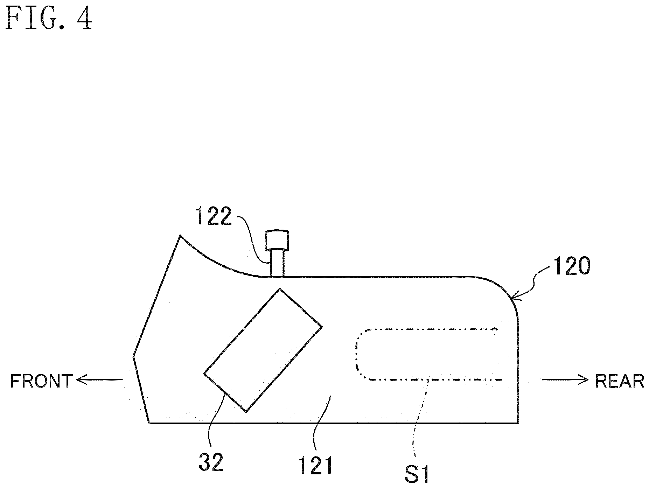

A console (interior material) 120 as shown in FIG. 4 is disposed between the vehicle seat S serving as the driver's seat and a vehicle seat (not shown) serving as the seat next to the driver inside the cabin R of the automobile 1, and is located on a lateral side of the vehicle seat S. The console 120 is elongated in the longitudinal direction of the vehicle, and extends from below the instrument panel 102 to the vicinity of a rear end of the vehicle seat S. The console 120 has side wall portions 121 on both right and left sides thereof. The side wall portions 121 extend in the top-to-bottom direction. The lower ends of the side wall portions 121 reach the floor panel 100. The console 120 has an upper portion that is provided with a shift lever 122 to operate a transmission (not shown), a console box (not shown), and any other component.

As shown in FIG. 1, a front end portion of an upper surface of the instrument panel 102 has a defroster outlet 102a. The defroster outlet 102a faces the inner surface of the windshield glass 105, and extends over a predetermined area in the lateral direction. The defroster outlet 102a is an opening for allowing air-conditioned wind to blow toward the inner surface of the windshield glass 105 therethrough. A rear portion of the instrument panel 102 has vent outlets 102b for allowing air-conditioned wind to blow toward a portion of the upper body or the entire upper body of the occupant A. The vent outlets 102b are respectively formed on both right and left sides of the instrument panel 102 and a central portion thereof in the lateral direction, and face the driver and the occupant next to the driver. A lower portion of the instrument panel 102 has heat outlets 102c for allowing air-conditioned wind to blow toward a portion of the lower body or the entire lower body of the occupant A. The heat outlets 102c can open in the vicinity of the feet of the driver and the occupant next to the driver, respectively, and can be referred to also as "foot-side outlets." The respective names of the outlets 102a, 102b, and 102c are used for convenience of description. These outlets merely need to satisfy their respective functions. Although not shown, vent outlets and heat outlets may be provided not only for front-seat occupants but also for rear-seat occupants.

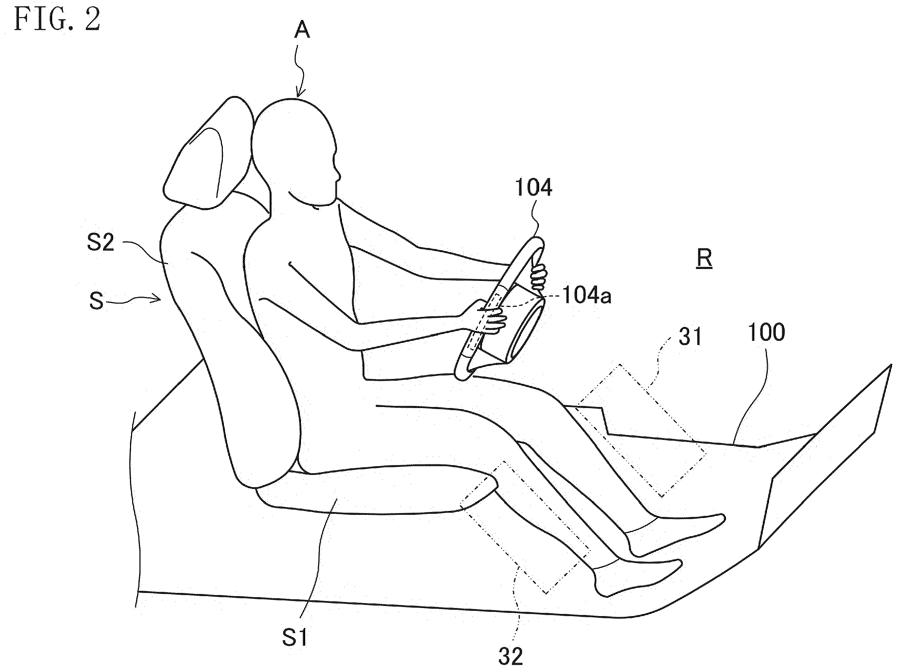

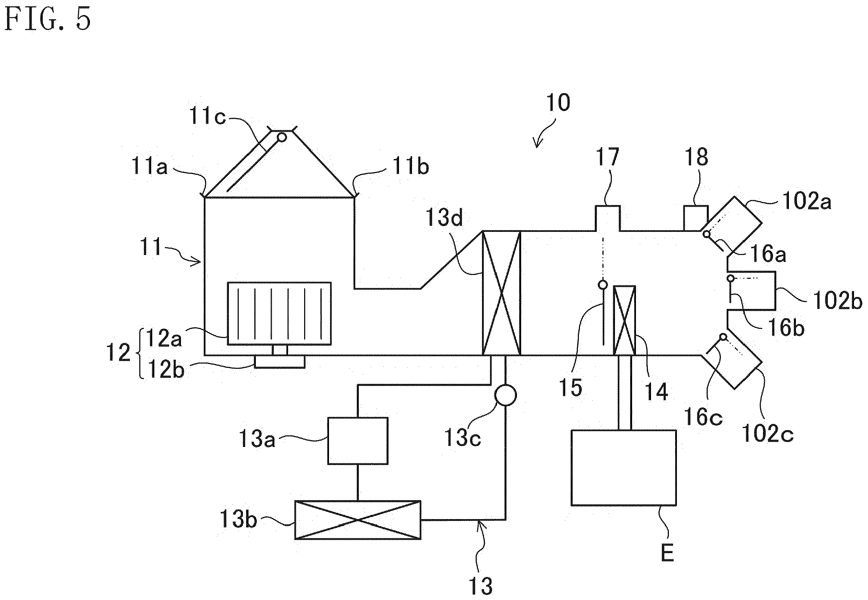

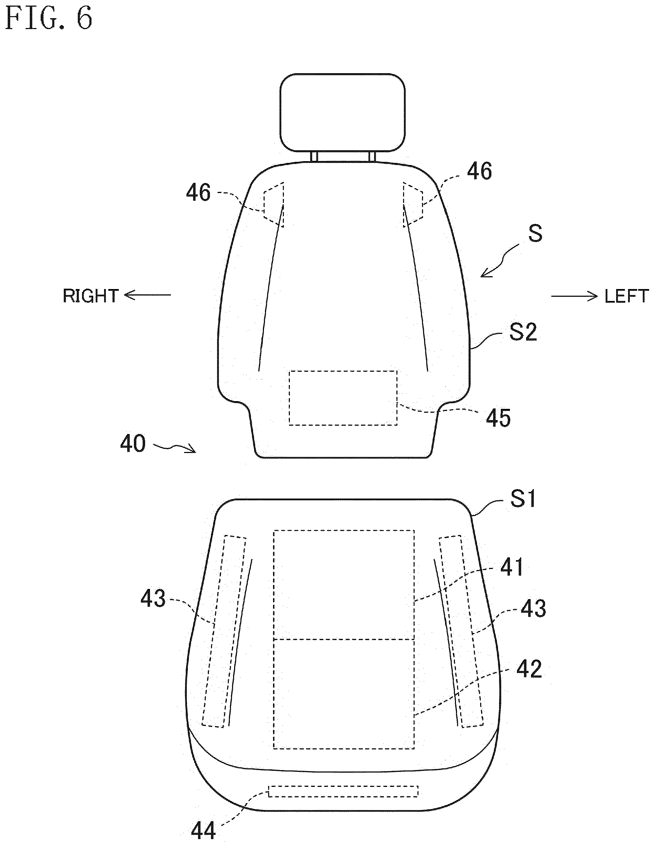

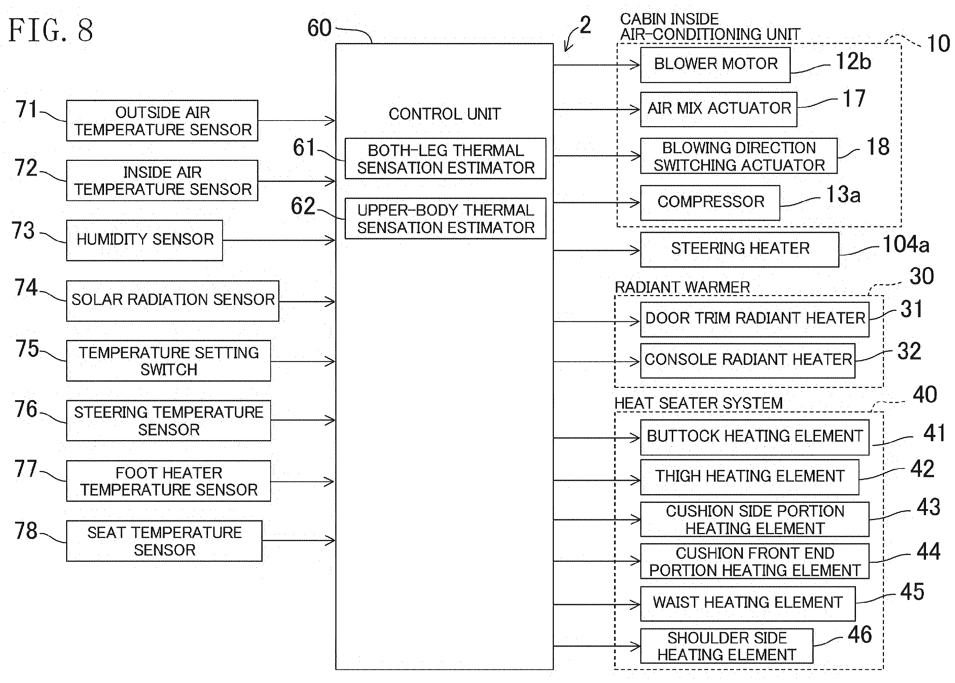

The automobile 1 includes a vehicle heater 2 shown in the block diagram of FIG. 8. The vehicle heater 2 includes a cabin air-conditioning unit 10 (shown in FIG. 5), steering heaters 104a (shown in FIGS. 1 and 2), a radiant warmer 30 (shown in FIG. 8), a seat heater system 40 (shown in FIGS. 6 and 8), and a control unit 60 (shown in FIG. 8).

Note that the automobile 1 may be a passenger car, or may be a loaded vehicle, such as a truck. These are exemplary vehicles, and a vehicle except an automobile may be equipped with the vehicle heater 2.

### (Configuration of Cabin Air-Conditioning Unit 10)

The cabin air-conditioning unit 10 is configured to produce air-conditioned wind blowing out of the defroster outlet 102a, the vent outlets 102b, and the heat outlets 102c in the cabin R, and to control air conditioning in the cabin R, i.e., a thermal environment around the occupant A in the cabin R, using the air-conditioned wind. Specifically, as shown in FIG. 5, the cabin air-conditioning unit 10 includes an air-conditioning casing 11, a blower 12, a refrigeration-cycle system 13, a heater core 14, an air mixing damper 15, blowing direction switching dampers 16a, 16b, and 16c, an air mix actuator 17, and a blowing direction switching actuator 18.

The air-conditioning casing 11 has an inside air inlet 11a which communicates with the cabin R and through which air (inside air) in the cabin R is taken in the air-conditioning casing 11, and an outside air inlet 11b which communicates with the outside of the cabin Rand through which air (outside air) outside the cabin is taken in the air-conditioning casing 11. The air-conditioning casing 11 includes therein an inside/outside air switching damper 11c operating to close one of the inside air inlet 11a and the outside air inlet 11b and open the other one of these inlets. If the inside/outside air switching damper 11c operates to open the inside air inlet 11a and to close the outside air inlet 11b, an operation is performed in an inside-air circulation mode. On the other hand, if the inside/outside air switching damper 11c operates to close the inside air inlet 11a and to open the outside air inlet 11b, an operation is performed in an outside-air introduction mode. The occupant A may manually switch the operation mode between the inside-air circulation mode and the outside-air introduction mode. Alternatively, a control unit 60 described below may automatically switch the operation mode therebetween.

The blower 12 includes a sirocco fan (centrifugal fan) 12a disposed inside the air-conditioning casing 11, and a blower motor 12b that rotationally drives the sirocco fan 12a. The sirocco fan 12a rotationally driven by the blower motor 12b allows air for air conditioning to be taken in the air-conditioning casing 11 through the inside air inlet 11a or the outside air inlet 11b. The air-conditioning air taken in the air-conditioning casing 11 is delivered toward the downstream side of the air-conditioning casing 11. Note that the type of blower 12 is merely an example. The blower 12 may be a blower including a fan except a centrifugal fan.

As shown in FIG. 8, the blower motor 12b is connected to the control unit 60. The control unit 60 turns the blower motor 12b on and off, and changes the rotational speed of the blower motor 12b per unit time. Increasing the rotational speed of the blower motor 12b per unit time increases the amount of air delivered by the blower 12.

As shown in FIG. 5, the refrigeration-cycle system 13 includes a compressor 13a, a condenser 13b, an expansion valve 13c, and an evaporator 13d, which are connected together through refrigerant pipes to allow a refrigerant to circulate therethrough. The compressor 13a is driven by an engine E (shown only in FIG. 5). A clutch (not shown) of the compressor 13a is controlled by the control unit 60 shown in FIG. 8. Thus, the compressor 13a is turned on and off.

The refrigerant discharged from the compressor 13a flows into the condenser 13b, and is condensed inside the condenser 13b. Then, the condensed refrigerant flows into the expansion valve 13c. The refrigerant that has flowed into the expansion valve 13c is decompressed, and then flows into the evaporator 13d. The evaporator 13d is disposed inside the air-conditioning casing 11, and the whole quantity of the air-conditioning air introduced into the air-conditioning casing 11 passes through the evaporator 13d. The refrigerant that has flowed into the evaporator 13d exchanges heat with the air-conditioning air passing through the outside of the evaporator 13d, while flowing through the inside of the evaporator 13d. Thus, the air-conditioning air is cooled, thereby producing cold air.

The heater core 14 is disposed downstream of the evaporator 13d in the airflow direction inside the air-conditioning casing 11. The heater core 14 is connected to a water jacket (not shown) of the engine E. A coolant in the engine E circulates through the heater core 14. Thus, if the coolant in the engine E has a higher temperature than the air-conditioning air passing through the outside of the heater core 14, the air-conditioning air is heated by exchanging heat with the coolant, thereby producing warm air.

Although not shown, in the case of an electric vehicle, for example, a coolant in a drive motor or an inverter can be passed through the heater core 14. Further, for example, in the case of an electric vehicle, the heater core 14 may be replaced with a heat pump system including an electric compressor 13a, and a refrigerant condenser (heating heat exchanger) may be provided inside the air-conditioning casing 11. In addition to the heater core 14, an electric heater (e.g., a PTC heater) or any other heater may be provided.

The air mixing damper 15 is a member for changing the ratio between the amount of air passing through the heater core 14 and the amount of air bypassing the heater core 14. As indicated by the solid line in FIG. 5, if the air mixing damper 15 fully closes a passage near the heater core 14, and fully opens a passage bypassing the heater core 14, air that has passed through the evaporator 13d does not pass through the heater core 14, and is thus fully cold. On the other hand, as indicated by the phantom line in FIG. 5, if the air mixing damper 15 fully opens the passage near the heater core 14, and fully closes the passage bypassing the heater core 14, the whole quantity of air that has passed through the evaporator 13d passes through the heater core 14, and is thus in a full hot state. The air mixing damper 15 can be stopped at an optional position between the position indicated by the solid line in FIG. 5 and the position indicated by the phantom line therein. Changing the position at which the air mixing damper 15 stops triggers a change in the ratio between the amount of air passing through the heater core 14 and the amount of air bypassing the heater core 14. As a result, the temperature of the produced air-conditioned wind is changed.

The air mix actuator 17 functions to actuate the air mixing damper 15, and is connected to the control unit 60 as shown in FIG. 8. The air mix actuator 17 can stop the air mixing damper 15 at a desired position upon receipt of a control signal from the control unit 60.

The blowing direction switching dampers 16a, 16b, and 16c shown in FIG. 5 are dampers for switching the direction in which air-conditioned wind blows out. One of the blowing direction switching dampers denoted by the reference character 16a is a damper for opening and closing the defroster outlet 102a, i.e., a defroster damper. Other ones of the blowing direction switching dampers denoted by the reference character 16b are dampers for opening and closing the vent outlets 102b, i.e., vent dampers. The other ones of the blowing direction switching dampers denoted by the reference character 16c are dampers for opening and closing the heat outlets 102c, i.e., heat dampers. The closed and open positions of each of the blowing direction switching dampers 16a, 16b, and 16c are indicated by the solid line and the phantom line, respectively. The blowing direction switching dampers 16a, 16b, and 16c can be stopped at an optional position between the closed position and the open position. Such motions of the blowing direction switching dampers 16a, 16b, and 16c can be achieved by a linkage (not shown) that has been known in the art.

The blowing direction switching dampers 16a, 16b, and 16c interlock with one another via the linkage to be capable of changing the direction in which air-conditioned wind blows out. For example, if the blowing direction switching damper 16a is in the open position, and the blowing direction switching dampers 16b and 16c are in the closed position, an operation is performed in a defroster mode in which air-conditioned wind blows out of only the defroster outlet 102a. If the blowing direction switching damper 16b is in the open position, and the blowing direction switching dampers 16a and 16c are in the closed position, an operation is performed in a vent mode in which air-conditioned wind blows out of only the vent outlets 102b. If the blowing direction switching dampers 16c are in the open position, and the blowing direction switching dampers 16a and 16b are in the closed position, an operation is performed in a heat mode in which air-conditioned wind blows out of only the heat outlets 102c. If the blowing direction switching dampers 16a and 16c are in the open position, and the blowing direction switching dampers 16b are in the closed position, an operation is performed in a defrost/heat mode in which air-conditioned wind blows out of the defroster outlet 102a and the heat outlets 102c. If the blowing direction switching dampers 16b and 16c are in the open position, and the blowing direction switching damper 16a is in the closed position, an operation is performed in a bi-level mode in which air-conditioned wind blows out of the vent outlets 102b and the heat outlets 102c. The blowing modes described above are examples. Switching the blowing direction switching dampers 16a, 16b, and 16c between the open and closed positions allows switching to be made among the various modes, and triggers a change in the degree of opening of each of the defroster outlet 102a, the vent outlets 102b, and the heat outlets 102c. Thus, the volume of air-conditioned wind blowing out of each outlet can be changed.

The configurations of the blowing direction switching dampers 16a, 16b, and 16c are merely examples. For example, two dampers may also be combined together to switch the operation among the blowing modes.

The blowing direction switching actuator 18 functions to actuate the blowing direction switching dampers 16a, 16b, and 16c, and is connected to the control unit 60 as shown in FIG. 8. The blowing direction switching actuator 18 can stop the blowing direction switching dampers 16a, 16b, and 16c at respective desired positions upon receipt of a control signal from the control unit 60. Thus, an operation can be performed in any one of the blowing modes described above.

### (Configuration of Seat Heater System 40)

As shown in FIG. 6, the seat heater system 40 is incorporated into the vehicle seat S. The vehicle seat S includes the seat cushion part S1, and a seat back part S2. FIG. 6 illustrates a state in which the vehicle seat S is divided into the seat cushion part S 1 and the seat back part S2 for convenience of description. As shown in FIGS. 1 and 2, when the vehicle seat S is installed in the vehicle 1, the seat cushion part S 1 and the seat back part S2 are integrated together. The vehicle seat S described in this embodiment constitutes a driver's seat. However, the present invention is applicable also to a seat constituting a seat next to the driver or a seat constituting a rear seat. The present invention is applicable also to a so-called bench seat on which a plurality of people can be seated side by side in the lateral direction.

The vehicle seat S includes the seat cushion part S1, and the seat back part S2. The seat cushion part S 1 may be referred to also as a "seat bottom part," and is configured to mainly support, from below, a portion of the occupant A from his/her buttocks (bottom) to his/her thighs. The seat back part S2 may be referred to also as a "seat backrest part," and is configured to mainly support, from behind, the waist and back of the occupant A, portions of the occupant A around his/her shoulder blades, and his/her shoulders.

The seat heater system 40 includes a buttock heating element 41, a thigh heating element 42, cushion side portion heating elements 43, a cushion front end portion heating element 44, a waist heating element 45, and shoulder side heating elements 46. The buttock heating element 41, the thigh heating element 42, the cushion side portion heating elements 43, and the cushion front end portion heating element 44 are incorporated into the seat cushion part S1, and can be specifically disposed between a cushion material and an external skin material. The buttock heating element 41, the thigh heating element 42, the cushion side portion heating elements 43, and the cushion front end portion heating element 44 are connected to a cabin temperature control unit 64 of the control unit 60, and are controlled by the cabin temperature control unit 64.

The waist heating element 45 and the shoulder side heating elements 46 are incorporated into the seat back part S2, and can be specifically disposed between a cushion material and an external skin material. The waist heating element 45 and the shoulder side heating elements 46 are connected to the cabin temperature control unit 64 of the control unit 60, and are controlled by the cabin temperature control unit 64.

Each of the heating elements 41 to 46 is configured as, for example, a wire rod that generates Joule heat by energization. Specifically, each heating element according to this embodiment uses the phenomenon where current flowing through an object turns into heat energy to generate heat, merely needs to be a heater wire generating heat by energization, and may be configured as, for example, a nichrome wire or any other suitable wire. The amount of heat generated by the wire rod increases or decreases depending not only on the magnitude of the current flowing through the wire rod, but also on the time during which the current flows therethrough.

The buttock heating element 41 is disposed in a back (rear) portion of an upper surface portion (seat portion) of the seat cushion part S1. The buttocks of the occupant A in the normal occupant posture are located immediately above the buttock heating element 41. The thigh heating element 42 is disposed in a near (front) portion of the upper surface portion (seat portion) of the seat cushion part S1. The thighs of the occupant A in the normal occupant posture are located immediately above the thigh heating element 42. The buttock heating element 41 and the thigh heating element 42 are positioned in the seat cushion part S1 to correspond to the respective parts of the occupant A in contact therewith. Thus, these heating elements serve as direct warmers configured to directly warm portions of the lower body of the occupant A above his/her knees.

On the other hand, the cushion side portion heating elements 43 are respectively disposed near right and left ends of the upper surface portion of the seat cushion part S1. If the occupant A is an adult having an average height and an average weight, and the occupant A is in the normal occupant posture, the thighs of the occupant S may be located between the right and left cushion side portion heating elements 43, or may be mostly located outside an area immediately above the cushion side portion heating elements 43 to warm outer side portions of the thighs. Thus, regions of the vehicle seat S near right and left ends of the upper surface portion of the seat cushion part S1 are not in contact with the occupant A. These regions each include the cushion side portion heating element 43. Thus, the cushion side portion heating elements 43 are spaced apart from the occupant A, and are radiant warmers configured to warm the occupant A by radiant heat.

The cushion front end portion heating element 44 is disposed near an upper end of a front surface portion of the seat cushion part S1. The cushion front end portion heating element 44 is elongated in the lateral direction, and corresponds in position to portions of the occupant A near the back of his/her right and left knees of the occupant A. If the occupant A is in the normal occupant posture, portions of the occupant A below his/her thighs (e.g., the back of his/her knees) are spaced upward or forward apart from the cushion front end portion heating element 44. A region of the vehicle seat S near the upper end of the front surface portion of the seat cushion part S1 is not in contact with the occupant A. This region includes the cushion front end portion heating element 44. The cushion front end portion heating element 44 is spaced apart from the occupant A, and is a radiant warmer configured to warm the occupant A by radiant heat.

The amount of heat generated by each of the buttock heating element 41, the thigh heating element 42, the cushion side portion heating elements 43, and the cushion front end portion heating element 44 can be changed through a change in the current value, energization period, or any other factor controlled by the cabin temperature control unit 64 of the control unit 60. The output upper limit value of each of the buttock heating element 41, the thigh heating element 42, the cushion side portion heating elements 43, and the cushion front end portion heating element 44 (the upper limit of the amount of heat generated per unit time) is set by the cabin temperature control unit 64. A comparison between the density at which the heater wire of each of the cushion side portion heating elements 43 and the cushion front end portion heating element 44 is patterned and the density at which the heater wire of each of the buttock heating element 41 and the thigh heating element 42 is patterned shows that the density at which the heater wire of each of the buttock heating element 41 and the thigh heating element 42 is patterned is higher. To prevent a moderate-temperature burn, all of these heating elements have their temperatures adjusted to temperatures lower than or equal to 42°C by the control unit 60.

The waist heating element 45 is disposed in a lower portion of the front surface portion of the seat back part S2. The waist of the occupant A in the normal occupant posture is located over a surface of a region of the seat back part S2 immediately covering the waist heating element 45. The waist heating element 45 is positioned in the seat back part S2 to correspond to a part of the occupant A in contact therewith. Thus, this heating element serves as a direct warmer configured to directly warm the occupant A. The waist heating element 45 may warm an area from the waist to the back. In this case, this heating element functions as a waist-and-back heating element, and is a direct warmer.

The shoulder side heating elements 46 are respectively disposed near the right and left ends of an upper portion of the front surface portion of the seat back part S2 close to the shoulders and neck of the occupant A, and are positioned so as to be prevented from reaching the back of the occupant A. If the occupant A is an adult having an average height and an average weight, and the occupant A is in the normal occupant posture, the left shoulder side heating element 46 is lateral to his/her left shoulder, and the right shoulder side heating element 46 is lateral to his/her right shoulder. Regions of the vehicle seat S near the right and left ends of the upper portion of the front surface portion of the seat back part S2 are not in contact with the occupant A. These regions each include the shoulder side heating element 46. The shoulder side heating elements 46 are spaced apart from the occupant A, and are radiant warmers configured to warm the occupant A by radiant heat.

The amount of heat generated by each of the waist heating element 45 and the shoulder side heating elements 46 can be changed through a change in the current value, energization period, energization period intervals, or any other factor controlled by the cabin temperature control unit 64 of the control unit 60. The output upper limit value of each of the waist heating element 45 and the shoulder side heating elements 46 is set by the cabin temperature control unit 64. A comparison between the density at which the heater wire of each of the shoulder side heating elements 46 is patterned and the density at which the heater wire of the waist heating element 45 is patterned shows that the density at which the heater wire of the waist heating element 45 is patterned is higher. To prevent a moderate-temperature burn, all of these heating elements have their temperatures adjusted to temperatures lower than or equal to 42°C by the control unit 60.

The seat heater system 40 may allow the buttock heating element 41, the thigh heating element 42, the waist heating element 45, the shoulder side heating elements 46, the cushion side portion heating elements 43, and the cushion front end portion heating element 44 to have their respective systems separately controlled in output such that if the buttocks and waist experience a satisfactory thermal sensation in advance, the associated heating elements can be turned off.

The turning on or off of the seat heater system 40 and the setting of the degree of heating of the seat heater system 40 can be achieved through an operation switch (not shown) or any other suitable switch in the cabin R, and can also be automatically controlled by the control unit 60.

### (Configuration of Steering Heaters 104a)

As shown in FIGS. 1 and 2, the steering heaters 104a are incorporated into respective portions of the steering wheel 104 in contact with the hands of the occupant A, specifically, portions of the steering wheel 104 gripped by the occupant A who is driving. Thus, the steering heaters 104a are positioned in the steering wheel 104 to correspond to parts of the occupant A in contact therewith, and each serve as a direct warmer configured to directly warm the occupant A.

The steering heaters 104a may be each configured as a wire rod similar to that of each of the heating elements of the seat heater system 40, and is connected to, and controlled by, the control unit 60. The turning on or off of the steering heaters 104a and the degree of heating of the steering heaters 104a can be achieved through an operation switch (not shown) or any other suitable switch in the cabin R, and can also be automatically controlled by the control unit 60.

### (Configuration of Radiant Warmer 30)

The radiant warmer 30 is provided for interior materials facing at least the left and right lateral aspects of the calves of the occupant A, and is an auxiliary heater that radiates heat to the right and left lateral aspects of the calves. The radiant warmer 30 includes a door trim radiant heater 31 provided in a lower portion of the door trim 113 shown in FIG. 3, and a console radiant heater 32 provided in a side wall portion 121 of the console 120 shown in FIG. 4.

The door trim radiant heater 31 is positioned at a portion of the door trim 113 below the armrest portion 113a, and is positioned at a portion of the door trim 113 forward of the front end of the seat cushion part S1 of the vehicle seat S. The door trim radiant heater 31 can be positioned forward of the front end of the seat cushion part S1 of the vehicle seat S that has been slid forward by the sliding device 101.

As shown in FIG. 1, the door trim radiant heater 31 is positioned so that the calves of the occupant A in a normal seated posture overlap with a heat radiation surface of the door trim radiant heater 31 as viewed from side. In this embodiment, the occupant A is seated on the left seat. Thus, the door trim radiant heater 31 faces the lateral aspect of the calf of the left leg of the occupant A on the left side of the calf with a space therebetween. Further, the door trim radiant heater 31 is also spaced apart from the medial aspect of the calf of the right leg of the occupant A on the left side of the calf. The shins of the occupant A in the normal occupant posture are inclined forward and downward toward a brake pedal, an accelerator pedal, or a footrest. Thus, the heat radiation surface of the door trim radiant heater 31 is also inclined forward and downward. The width (dimension in the longitudinal direction of the vehicle) W of the heat radiation surface of the door trim radiant heater 31 is set to be sufficiently greater than the diameter of a part of each of the legs below the associated knee of the occupant A. Thus, even if the occupant A moves his/her legs, the radiant heat radiated by the door trim radiant heater 31 enters the calves and the aspects of the shins. The height H of the heat radiation surface of the door trim radiant heater 31 may be approximately equal to the length of the part of the leg below the knee of the occupant A. As a result, the radiant heat radiated by the door trim radiant heater 31 enters a large area from upper portions of the calves and the aspects of parts of the legs below the knees to lower portions of these body parts.

The console radiant heater 32 is positioned at a portion of the side wall portion 121 of the console 120 (shown in FIG. 4) located forward of the front end of the seat cushion part S1 of the vehicle seat S. The height and width of the heat radiation surface of the console radiant heater 32 may be respectively equal to the height and width of the heat radiation surface of the door trim radiant heater 31. However, the height of the heat radiation surface of the door trim radiant heater 31 may be greater than the height of the heat radiation surface of the console radiant heater 32, and the width of the heat radiation surface of the door trim radiant heater 31 may be greater than the width of the heat radiation surface of the console radiant heater 32. Specifically, since the door trim 113 is closer to the outside of the cabin than the console 120 is, the door trim 113 tends to be affected by cold air outside the cabin, and tends to release heat to the outside of the cabin. If the height and width of the door trim radiant heater 31 of the door trim 113 are respectively greater than the height and width of the console radiant heater 32, heating can function more quickly while the balance between heat from the right heater and heat from the left heater is substantially prevented from being lost. If the door trim 113 has a pocket, a radiant heater is disposed on a surface of the door trim 113 outside the pocket and near the cabin while a heat insulator is bonded to the back surface of the radiant heater.

The console radiant heater 32 is positioned so that the calves of the occupant A in the normal occupant posture overlap with the heat radiation surface of the console radiant heater 32 as viewed from side. In this embodiment, the console radiant heater 32 faces the lateral aspect of the calf of the right leg of the occupant A on the right side of the calf with a space therebetween. Further, the console radiant heater 32 is also spaced apart from the medial aspect of the calf of the left leg of the occupant A on the right side of the calf. The heat radiation surface of the console radiant heater 32 is also inclined forward and downward, just like the heat radiation surface of the door trim radiant heater 31.

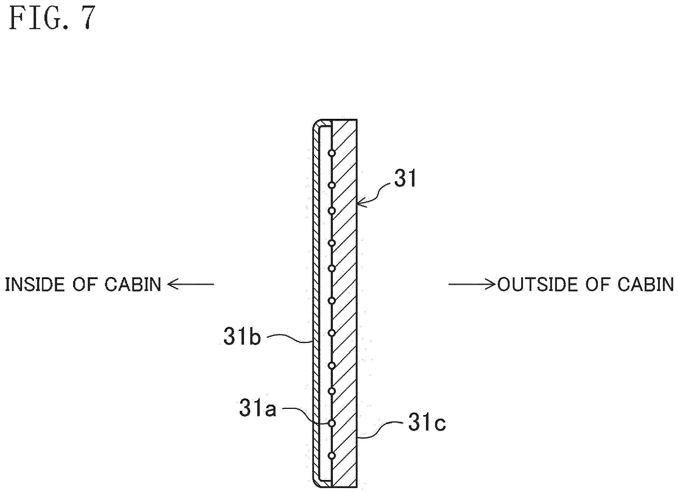

As shown in FIG. 7, the door trim radiant heater 31 includes a heater wire 31a that generates heat by energization similar to that of the heating elements of the seat heater system 40, a cover member 31b that covers a side of the heater wire 31a near the inside of the cabin, and a heat insulator 31c that is disposed on a side of the heater wire 31 near the outside of the cabin. The heater wire 31a is disposed over the entire area of the door trim radiant heater 31 from the upper end to the lower end and from the front end to the rear end of the door trim radiant heater 31. The cover member 31b is a member for preventing the occupant A and an article from coming into contact with the heater wire 31a. The cover member 3 1b can be made of a heat-resistant resin material or any other suitable material. If the cover member 31b has a hole, a slit, or any other similar structure, or has a mesh, heat can be more easily radiated from the heater wire 31a toward the inside of the cabin. The heat insulator 31c is a member for preventing the heat from the heater wire 31a from escaping to the outside of the cabin, and can be made of a heat-insulating material that has been known in the art. The console radiant heater 32 may have a configuration similar to that of the door trim radiant heater 31.

The radiant warmer 30 is connected to, and controlled by, the control unit 60. The turning on or off of the radiant warmer 30 and the setting of the degree of heating of the radiant warmer 30 can be achieved through an operation switch (not shown) or any other suitable switch in the cabin R, and can also be automatically controlled by the radiant warmer 30.

The radiant warmer 30 can be provided not only for the driver's seat but also for the seat next to the driver in a similar manner. Although not shown, if the rear seat is separated into right and left parts, a rear seat console is provided. Thus, a radiant warmer similar to the radiant warmer 30 can be provided also for the rear seat.

### (Other Configurations of Vehicle Heater 2)

As shown in FIG. 8, the vehicle heater 2 includes an outside air temperature sensor 71, an inside air temperature sensor 72, a humidity sensor 73, a solar radiation sensor 74, a temperature setting switch 75, a steering temperature sensor 76, a foot heater temperature sensor 77, and a seat temperature sensor 78. These sensors and the switch may be configured as members that have been known in the art, and are connected to the control unit 60 to output their sensed values in predetermined short cycles or successively, for example. The sensors that detect a temperature may include a thermocouple, for example.

The outside air temperature sensor 71 is disposed outside the cabin, and detects the air temperature outside the cabin. The inside air temperature sensor 72 is disposed inside the cabin R, detects the air temperature inside the cabin R, and can sense or estimate the temperature condition inside the cabin. The humidity sensor 73 is disposed inside the cabin R, detects the humidity inside the cabin R, and can sense or estimate the humidity condition inside the cabin. The solar radiation sensor 74 is disposed inside the cabin R, detects the amount of solar radiation entering the cabin R, and can sense or estimate the solar radiation condition inside the cabin R. The temperature setting switch 75 is disposed on the instrument panel 102 in the cabin R, and is used by the occupant A to set a desired conditioned air temperature.

The instrument panel 102 includes, not only the temperature setting switch 75, but also an on/off switch for air conditioning, an air volume adjusting switch, and an automatic air-conditioning switch, although not shown.

The steering temperature sensor 76 is disposed on the steering wheel 104, and detects the temperature of portions of the steering wheel 104 in contact with the occupant A, the temperature of the steering heaters 104a, and other temperatures. The foot heater temperature sensor 77 is disposed on the interior materials (the door trim 113 and the console 120) including the radiant warmer 30, and detects the surface temperatures of the interior materials, the temperatures of the door trim radiant heater 31 and the console radiant heater 32, and other temperatures. The seat temperature sensor 78 is incorporated into the seat cushion part S1 and the seat back part S2 of the vehicle seat S, and detects the temperature of the external skin material of each of the seat cushion part S1 and the seat back part S2 and the temperatures of the heating elements 41 to 46 of the seat heater system 40.

### (Configuration of Control Unit 60)

Although not shown, the control unit 60 shown in FIG. 8 may be configured as, for example, a microcomputer including a central processing unit and a storage device (e.g., a ROM or a RAM). The control unit 60 may include a both-leg thermal sensation estimator 61 that estimates the thermal sensation experienced by both legs of an occupant, and an upper-body thermal sensation estimator 62 that estimates the thermal sensation experienced by the front and back sides of the upper body of the occupant, and may be configured to implement various means and processes described below using hardware, or may be configured to implement such means and processes in accordance with software (a program) stored in the storage device. The both-leg thermal sensation estimator 61 and the upper-body thermal sensation estimator 62 can estimate the thermal sensation experienced by each of associated portions of the occupant A using a technique that has been known in the technical field of air conditioners.

The control unit 60 is configured to perform automatic air conditioning control based on the values detected by the outside air temperature sensor 71, the inside air temperature sensor 72, the humidity sensor 73, and the solar radiation sensor 74, and the temperature set by the occupant A through the temperature setting switch 75, and any other elements. Specifically, if the outside air temperature and the temperature inside the cabin R are low, and heating is required, the cabin air-conditioning unit 10 is controlled to produce high-temperature air-conditioned wind. The produced wind is then supplied into the cabin R. At this moment, the required degree of heating is set based on the temperature set by the occupant A, the temperature in the cabin R, and other temperatures. Automatic air-conditioning control during heating is performed to adjust the degree of heating in accordance with the inside air temperature sensor 72, the steering temperature sensor 76, the foot heater temperature sensor 77, and the seat temperature sensor 78 through adjustment of the temperature and volume of the air-conditioned wind, and the outputs of the radiant warmer 30 and the seat heater system 40 based on values obtained by estimating the thermal sensation experienced by both legs of the occupant A and the thermal sensation experienced by the upper body of the occupant A so that various portions of the occupant A experience an appropriate thermal sensation. In contrast, if cooling is required, the cabin air-conditioning unit 10 is controlled to produce low-temperature air-conditioned wind. The produced wind is then supplied into the cabin R. At this moment, the required degree of cooling is set based on the temperature set by the occupant A, the temperature in the cabin R, and other temperatures. The temperature and volume of the air-conditioned wind are adjusted in accordance with the degree of cooling. A technique for automatic air-conditioning control during this cooling has been known in the art. Thus, this technique will not be described in detail.

Further, the rated output of the door trim radiant heater 31 of the radiant warmer 30 is set to be higher than the rated output of the console radiant heater 32. Thus, the control unit 60 can perform control so that the output of the door trim radiant heater 31 is higher than the output of the console radiant heater 32 to allow portions of the right and left legs of the occupant A blow his/her knees to experience the same thermal sensation, and can set the outputs of both of the heaters 31 and 32 so that the output of the door trim radiant heater 31 is higher than the output of the console radiant heater 32. Examples of a specific technique for setting the outputs include a technique in which the amount of power supplied to the heater wire 31a shown in FIG. 7 is changed. The outputs may be represented by a heat flux, and are controlled so that the heat flux of the door trim radiant heater 31 is smaller than the heat flux of the console radiant heater 32. Specifically, since the door trim 113 is closer to the outside of the cabin than the console 120 is, the door trim 113 tends to be affected by cold air outside the cabin, and tends to release heat to the outside of the cabin. However, if the output of the door trim radiant heater 31 of the door trim 113 is higher than the output of the console radiant heater 32, heating can function more quickly while the balance between heat from the right heater and heat from the left heater is substantially prevented from being lost.

The outputs of the door trim radiant heater 31 and the console radiant heater 32 may be adjusted by the control unit 60, or may be set through a change in the diameter of the heater wire 31a shown in FIG. 7 or the density at which the heater wire 31a is patterned.

Turning the cabin air-conditioning unit 10 on allows the control unit 60 to turn the steering heaters 104a, the radiant warmer 30, and the seat heater system 40 on automatically or by manual operation of the occupant A if heating is required. The output of the radiant warmer 30 can be changed in accordance with, for example, the temperature in the cabin R or the outside air temperature, and is controlled to increase as the temperature decreases. The radiant warmer 30 can be automatically turned off if a predetermined time has elapsed since the radiant warmer 30 is turned on, or if the temperature in the cabin R increases to a predetermined temperature.

Control is performed during heating such that the outputs of the radiant heaters 31 and 32 are adjusted to reduce the difference in temperature between the lateral and medial aspects of each of the legs through warming of the portions of the legs below the knees, i.e., warming of the lateral aspects of both the legs using the radiant heaters 31 and 32 and warming of the feet using warm air produced by the cabin air-conditioning unit 10, and to allow both of the legs to experience a satisfactory thermal sensation.

Turning the radiant warmer 30 on allows the door trim radiant heater 31 and the console radiant heater 32 to start being energized to radiate heat. This allows the calves of the occupant to be warmed from their right and left sides by radiant heat. Thus, cold heat of the interior materials is less likely to reach the calves and lateral and medial aspects of the shins.

The outputs of the door trim radiant heater 31 and the console radiant heater 32 can be set such that warm air blowing out of the cabin air-conditioning unit 10 toward both of the legs of the occupant A and the thermal sensation provided by the door trim radiant heater 31 and the console radiant heater 32 and experienced by both of the legs of the occupant A are uniform. This can be achieved by the control unit 60.

The output of the seat heater system 40 and the temperature of air blowing out of the cabin air-conditioning unit 10 can be individually set such that the seat heater system 40 and warm air provided by the cabin air-conditioning unit 10 allow front and back sides of the upper body of the occupant A to experience a uniform thermal sensation. This can be achieved by the control unit 60. The front side of the upper body is, for example, the chest or the belly.

In addition, a higher volume of warm air blowing out of the cabin air-conditioning unit 10 from near the feet can be distributed toward an area near the door trim 113. For example, the heat outlets 102c are respectively provided near the door trim 113 and the console 120. Dampers (not shown) that can independently open and close the heat outlets 102c are provided, and are controlled by the cabin inside air-conditioning unit 10 to allow the volume of warm air blowing near the door trim 113 to be higher than that near the console 120.

### (Advantages of Embodiment)

As described above, the vehicle heater 2 according to this embodiment blows air-conditioned wind produced by the cabin air-conditioning unit 10 through the outlets 102a, 102b, and 102c in the cabin. Thus, the air-conditioned wind allows air in the cabin R to be conditioned. In parallel with the air-conditioning using air-conditioned wind, the seat heater system 40 and the steering heaters 104a can directly warm parts of the occupant A in contact therewith. In addition, the radiant warmer 30 warms the calves of the occupant A from their right and left sides by radiant heat. Thus, even if the temperature in the cabin R is low, the calves and lateral and medial aspects of the shins can be prevented from experiencing a cold sensation. As a result, warming with low energy produced by radiant heat input generated by the radiant warmer 30 and direct heat input generated by the seat heater system 40 allows the occupant A to experience a uniform thermal sensation from his/her legs to his/her upper body, and can simultaneously reduce the energy consumed by heating of the cabin air-conditioning unit 10.

### (Other Embodiments)

The embodiment described above is a mere example in every respect, and shall not be interpreted in a limited manner.

### INDUSTRIAL APPLICABILITY

As can be seen from the foregoing description, the present invention is useful for a vehicle heater for an automobile or any other vehicle, for example.

### DESCRIPTION OF REFERENCE CHARACTERS

- 1: Automobile (Vehicle)
- 2: Vehicle Heater
- 10: Cabin Air-conditioning Unit
- 30: Radiant Warmer
- 31: Door Trim Radiant Heater
- 31a: Heater Wire
- 31b: Cover Member
- 31c: Heat Insulator
- 32: Console Radiant Heater
- 40: Seat Heater System
- 41: Buttock Heating Element (Direct Warmer)
- 42: Thigh Heating Element (Direct Warmer)
- 45: Waist Heating Element (Direct Warmer)
- 104a: Steering Heater (Direct Warmer)
- 113: Door Trim (Interior Material)
- 113a: Armrest Portion
- 120: Console (Interior Material)

## Claims

1. A vehicle heater (2) mountable in a vehicle including a vehicle door (110), a console (120), a seat (S) and interior materials (113, 120), the vehicle heater (2) including a cabin air-conditioning unit (10) configured to produce air-conditioned wind blowing out of an outlet (102a, 102b, 102c) in a cabin and to condition air in the cabin using the air-conditioned wind, the vehicle heater (2) comprising:
a direct warmer (41, 42, 45, 104a) positioned to correspond to a part of the occupant (A) in contact therewith to directly warm the occupant (A);
a radiant warmer (30, 31, 32) provided in interior materials (113, 120) respectively facing at least right and left lateral aspects of calves of the occupant (A), and configured to radiate heat to the right and left lateral aspects of the calves;
a controller (60) configured to control the cabin air-conditioning unit (10), the direct warmer (41, 42, 45, 104a), and the radiant warmer (30, 31, 32), wherein
the interior materials (113, 120) include a door trim (113) disposed on a side of a vehicle door (110) facing the cabin, and a console (120) lateral to a seat (S),
**characterized in that**
the radiant warmer (30, 31, 32) includes a door trim radiant heater (31) provided in a lower portion of the door trim (113), and a console radiant heater (32) provided in a side wall portion of the console (120);
the controller (60) includes a both-leg thermal sensation estimator (61) configured to estimate a thermal sensation experienced by each of legs of the occupant (A), and
outputs of the door trim radiant heater (31) and the console radiant heater (32) are set such that warm air blowing out of the cabin air-conditioning unit (10) toward both of the legs of the occupant (A), the door trim radiant heater (31), and the console radiant heater (32) allow both of the legs of the occupant (A) to experience a uniform thermal sensation.

2. The vehicle heater (2) of claim 1, wherein
the door trim radiant heater (31) is positioned at a portion of the door trim (113) below an armrest portion (113a) of the door trim (113).

3. The vehicle heater (2) of claim 1, wherein
the door trim radiant heater (31) is positioned at a portion of the door trim (113) forward of a front end of the seat (S), and
the console radiant heater (32) is positioned at a portion of the side wall portion (121) of the console (120) forward of the front end of the seat (S).

4. The vehicle heater (2) of claim 1, wherein
the direct warmer (41, 42, 45, 104a) is positioned to warm portions of the occupant (A) above his/her knees.

5. The vehicle heater (2) of claim 4,
wherein the controller (60) includes an upper-body thermal sensation estimator (62) configured to estimate a thermal sensation experienced by front and back sides of an upper body of the occupant (A),
the direct warmer (41, 42, 45) is a seat heater system (40) configured to warm thighs, buttocks, a waist, and a back of the occupant (A), and
the controller (60) sets an output of the seat heater system (40) and a temperature of air blowing out of the cabin air-conditioning unit (10) such that the seat heater system (40) and warm air provided by the cabin air-conditioning unit (10) allow the front and back sides of the upper body of the occupant (A) to experience a uniform thermal sensation.

6. The vehicle heater (2) of claim 1, wherein
the door trim radiant heater (31) has a higher rated output than the console radiant heater (32) does.

7. The vehicle heater (2) of claim 1, wherein
the door trim radiant heater (31) includes a heater wire (31a) configured to generate heat by energization, a cover member (31b) configured to cover a side of the heater wire (31a) near inside of the cabin, and a heat insulator (31c) disposed on a side of the heater wire (31a) near outside of the cabin.

8. A vehicle (1) comprising a vehicle door (110), a console (120), a seat (S), interior materials (113, 120) and the vehicle heater (2) of any one of claims 1 to 7.

## Patentansprüche

1. Fahrzeugheizung (2), die in einem Fahrzeug mit einer Fahrzeugtür (110), einer Konsole (120), einem Sitz (S) und Innenmaterialien (113, 120) anbringbar ist, wobei die Fahrzeugheizung (2) eine Kabinenklimaanlageneinheit (10) aufweist, die ausgestaltet ist, einen klimatisierten Luftstrom, der aus einem Auslass (102a, 102b, 102c) in einer Kabine ausbläst, zu erzeugen, und die Luft in der Kabine unter Verwendung des klimatisierten Luftstroms zu klimatisieren, wobei die Fahrzeugheizung (2) umfasst:
einen Direktwärmer (41, 42, 45, 104a), der angeordnet ist, einem Teil des Insassen (A) in Kontakt damit zu entsprechen, um den Insassen (A) direkt zu wärmen,
einen Strahlungswärmer (30, 31, 32), der in Innenmaterialien (113, 120) angeordnet ist, die jeweils wenigstens rechten und linken seitlichen Aspekten der Waden des Insassen (A) gegenüberliegen, und ausgestaltet ist, Wärme auf die rechten und linken lateralen Aspekte der Waden zu strahlen,
eine Steuereinheit (60), die ausgestaltet ist, die Kabinenklimaanlageneinheit (10), den Direktwärmer (41, 42, 45, 104a) und den Strahlungswärmer (30, 31, 32) zu steuern, wobei
die Innenmaterialien (113, 120) eine Türverkleidung (113) die an einer Seite einer Fahrzeugtür (110) angebracht ist, die in Richtung der Kabine weist, und eine Konsole (120) lateral zu einem Sitz (S) umfassen,
**gekennzeichnet dadurch, dass**
der Strahlungswärmer (30, 31, 32) eine Türverkleidungsstrahlungsheizung (31), die in einem unteren Abschnitt der Türverkleidung (113) vorgesehen ist, und eine Konsolenstrahlungsheizung (32) umfasst, die in einem Seitenwandungsabschnitt der Konsole (120) vorgesehen ist,
die Steuereinheit (60) einen Abschätzer (61) für eine thermische Wahrnehmung an beiden Beinen umfasst, der ausgestaltet ist, eine thermische Wahrnehmung abzuschätzen, die von jedem der Beinen des Insassen (A) erfahren wird, und
Auslässe der Türverkleidungsstrahlungsheizung (31) und der Konsolenstrahlungsheizung (32) derart eingestellt sind, dass warme Luft aus der Kabinenklimaanlageneinheit (10) auf beide Beine des Insassen (A) geblasen wird, die Türverkleidungsstrahlungsheizung (31) und die Konsolenstrahlungsheizung (32) beiden Beinen des Insassen (A) erlauben, eine gleichförmige thermische Wahrnehmung zu erfahren.

2. Fahrzeugheizung (2) nach Anspruch 1, wobei
die Türverkleidungsstrahlungsheizung (31) an einem Abschnitt der Türverkleidung (113) unterhalb eines Armlehnenabschnitts (113a) der Türverkleidung (113) positioniert ist.

3. Fahrzeugheizung (2) nach Anspruch 1, wobei
die Türverkleidungsstrahlungsheizung (31) an einem Abschnitt der Türverkleidung (113) vor einem Frontende des Sitzes (S) positioniert ist, und
die Konsolenstrahlungsheizung (32) an einem Abschnitt des Seitenwandungsabschnitts (121) der Konsole (120) vor dem Frontende des Sitzes (S) positioniert ist.

4. Fahrzeugheizung (2) nach Anspruch 1, wobei
der Direktwärmer (41, 42, 45, 104a) positioniert ist, um Bereiche des Insassen (A) oberhalb seiner/ihrer Knie zu wärmen.

5. Fahrzeugheizung (2) nach Anspruch 4,
wobei die Steuereinheit (60) einen Abschätzer (62) für eine thermische Wahrnehmung eines Oberkörpers umfasst, der ausgestaltet ist, eine thermische Wahrnehmung abzuschätzen, die durch Vorder- und Rückseiten eines Oberkörpers des Insassen (A) erfahren wird,
der Direktwärmer (41, 42, 45) ein Sitzheizungssystem (40) ist, das ausgestaltet ist, Oberschenkel, das Gesäß, eine Hüfte und einen Rücken des Insassen (A) zu wärmen, und
die Steuereinheit (60) eine Ausgabe des Sitzheizungssystems (40) und eine Temperatur von Luft, die aus der Kabinenklimaanlageneinheit (10) geblasen wird, derart einstellt, dass das Sitzheizungssystem (40) und warme Luft, die durch die Kabinenklimaanlageneinheit (10) bereitgestellt wird, den vorderen und hinteren Seiten des Oberkörpers des Insassen (A) erlauben, eine gleichförmige thermische Wahrnehmung zu erfahren.

6. Fahrzeugheizung (2) nach Anspruch 1, wobei
die Türverkleidungsstrahlungsheizung (13) eine größere Nennausgabe als die Konsolenstrahlungsheizung (32) hat.

7. Fahrzeugheizung (2) nach Anspruch 1, wobei
die Türverkleidungsstrahlungsheizung (31) einen Heizungsdraht (31a), der ausgestaltet ist, Wärme per Speisung zu erzeugen, ein Abdeckelement (31b), das ausgestaltet ist, eine Seite des Heizungsdrahts (31a) nahe einem Inneren der Kabine abzudecken, und einen Wärmeisolator (31c) umfasst, der auf einer Seite des Heizungsdrahts (31a) nahe einer Außenseite der Kabine angeordnet ist.

8. Fahrzeug (1) mit einer Fahrzeugtür (110), einer Konsole (120), einem Sitz (S), Innenmaterialien (113, 120) und der Fahrzeugheizung (2) nach einem der Ansprüche 1 bis 7.

## Revendications

1. Chauffage de véhicule (2) apte à être monté dans un véhicule comprenant une portière de véhicule (110), une console (120), un siège (S) et des matériaux intérieurs (113, 120), le chauffage de véhicule (2) comprenant une unité de climatisation de cabine (10) qui est configurée pour produire un courant d'air climatisé soufflant d'une sortie (102a, 102b, 102c) dans une cabine et pour climatiser l'air dans la cabine en utilisant le courant d'air climatisé, le chauffage de véhicule (2) comprenant.
un réchauffeur direct (41, 42, 45, 104a) qui est positionné pour correspondre à une partie de l'occupant (A) en contact avec celle-ci pour réchauffer directement l'occupant (A),
un réchauffeur à rayonnement (30, 31, 32) qui est disposé dans des matériaux intérieurs (113, 120) faisant respectivement face à au moins des aspects latéraux droit et gauche des mollets de l'occupant (A), et qui est configuré pour émettre de la chaleur vers les aspects latéraux droit et gauche des mollets,
une unité de commande (60) qui est configurée pour commander l'unité de climatisation de cabine (10), le réchauffeur direct (41, 42, 45, 104a) et le réchauffeur à rayonnement (30, 31, 32), dans lequel
les matériaux intérieurs (113, 120) comprennent un habillage de portière (113) disposé sur un côté d'une portière de véhicule (110) montrant en direction de la cabine, et une console (120) latérale à un siège (S),
**caractérisé par le fait que**
le réchauffeur à rayonnement (30, 31, 32) comprend un chauffage à rayonnement d'habillage de portière (31) qui est prévu dans une portion inférieure de l'habillage de portière (113), et un chauffage à rayonnement de console (32) qui est prévu dans une portion de paroi latérale de la console (120),
l'unité de commande (60) comprend un estimateur (61) de sensation thermique des deux jambes qui est configuré pour estimer une sensation thermique ressentie par chacune des jambes de l'occupant (A), et
des sorties du chauffage à rayonnement d'habillage de portière (31) et du chauf-fage à rayonnement de console (32) sont réglées de telle sorte que de l'air chaud est soufflé hors de l'unité de climatisation de cabine (10) en direction des deux jambes de l'occupant (A), le chauffage à rayonnement d'habillage de portière (31) et le chauffage à rayonnement de console (32) permettent aux deux jambes de l'occupant (A) de ressentir une sensation thermique uniforme.

2. Chauffage de véhicule (2) selon la revendication 1, dans lequel
le chauffage à rayonnement d'habillage de portière (31) est positionné au niveau d'une portion de l'habillage de portière (113) au-dessous d'une portion d'accoudoir (113a) de l'habillage de portière (113).

3. Chauffage de véhicule (2) selon la revendication 1, dans lequel
le chauffage à rayonnement d'habillage de portière (31) est positionné au niveau d'une portion de l'habillage de portière (113) devant une extrémité avant du siège (S), et
le chauffage à rayonnement de console (32) est positionné au niveau d'une portion de la portion de paroi latérale (121) de la console (120) devant l'extrémité avant du siège (S).

4. Chauffage de véhicule (2) selon la revendication 1, dans lequel
le réchauffeur direct (41, 42, 45, 104a) est positionné pour réchauffer des portions de l'occupant (A) situées au-dessus de ses genoux.

5. Chauffage de véhicule (2) selon la revendication 4,
dans lequel l'unité de commande (60) comprend un estimateur (62) de sensation thermique du haut du corps qui est configuré pour estimer une sensation thermique ressentie par des côtés avant et arrière d'un haut du corps de l'occupant (A),
le réchauffeur direct (41, 42, 45) est un système de chauffage de siège (40) qui est configuré pour réchauffer les cuisses, les fesses, une hanche et un dos de l'occupant (A), et
l'unité de commande (60) règle une sortie du système de chauffage de siège (40) et une température d'air soufflé hors de l'unité de climatisation de cabine (10) de telle sorte que le système de chauffage de siège (40) et de l'air chaud fourni par l'unité de climatisation de cabine (10) permettent aux côtés avant et arrière du haut du corps de l'occupant (A) de ressentir une sensation thermique uniforme.

6. Chauffage de véhicule (2) selon la revendication 1, dans lequel
le chauffage à rayonnement d'habillage de portière (31) présente une puissance nominale supérieure à celle du chauffage à rayonnement de console (32).

7. Chauffage de véhicule (2) selon la revendication 1, dans lequel
le chauffage à rayonnement d'habillage de portière (31) comprend un fil de chauffage (31a) qui est configuré pour générer de la chaleur par alimentation, un élément de couverture (31b) qui est configuré pour recouvrir un côté du fil de chauffage (31a) près d'un intérieur de la cabine, et un isolant thermique (31c) qui est disposé sur un côté du fil de chauffage (31a) près d'un extérieur de la cabine.

8. Véhicule (1) comprenant une portière de véhicule (110), une console (120), un siège (S), des matériaux intérieurs (113, 120) et le chauffage de véhicule (2) selon l'une quelconque des revendications 1 à 7.
